# EUROPÄISCHE PATENTSCHRIFT

(11) **EP 3 339 667 B1**
(45) Veröffentlichungstag und Bekanntmachung des Hinweises auf die Patenterteilung: **14.08.2019**
(21) Anmeldenummer: 17205665.7
(22) Anmeldetag: 06.12.2017
(51) Int. Cl.: F16C 11/04, B62B 7/06, F16C 11/10

(54) **LAGERANORDNUNG, BEFESTIGUNGSVORRICHTUNG HIERMIT, SOWIE ANBAUTEIL FÜR FAHRZEUGE MIT DIESER BEFESTIGUNGSVORRICHTUNG**
BEARING ARRANGEMENT, FASTENING DEVICE USING THE SAME, AND ATTACHMENT FOR VEHICLES WITH SUCH A FASTENING DEVICE
AGENCEMENT DE PALIER, DISPOSITIF DE FIXATION LE COMPRENANT, AINSI QUE COMPOSANT POUR VÉHICULES DOTÉ DUDIT DISPOSITIF DE FIXATION

(30) Priorität: 21.12.2016 DE 102016225763
(43) Veröffentlichungstag der Anmeldung: 27.06.2018
(73) Patentinhaber: MEKRA LANG GmbH & Co. KG, 91465 Ergersheim (DE)
(72) Erfinder: Dr. Lang, Werner, 91465 Ergersheim (DE); Finkenberger, Elmar, 91587 Adelshofen (DE); Renk, Bastian, 91465 Ergersheim (DE)
(74) Vertreter: Winter, Brandl, Fürniss, Hübner, Röss, Kaiser, Polte - Partnerschaft mbB

(56) Entgegenhaltungen:
- DE-A1-102010 055 529

## Beschreibung

Die Erfindung betrifft eine Lageranordnung zur dreh- oder schwenkbeweglichen Verbindung eines ersten und zweiten Bauteils miteinander, insbesondere, jedoch nicht ausschließlich in einer Befestigungsvorrichtung zur Anbringung eines Anbauteils an einem Fahrzeug. Weiterhin betrifft die vorliegende Erfindung eine Befestigungsvorrichtung mit einer derartigen Lageranordnung, sowie ein Anbauteil, welches eine derartige Befestigungsvorrichtung verwendet.

Unter "Anbauteil" bzw. "Anbauteile" seien im Rahmen der vorliegenden Erfindung Ausstattungs- oder Zubehörteile verstanden, welche serienmäßig oder nachträglich an Fahrzeugen angebracht werden. Beispiele hierfür sind u.a. indirekte Sichtsysteme, Spiegelersatzsysteme, Spiegel oder Spiegelbaugruppen, Kameras, Beleuchtungskomponenten oder Signalgeber. Die nachfolgende Beschreibung greift aus diesen exemplarischen Möglichkeiten diejenige des indirekten Sichtsystems heraus, ist jedoch nicht hierauf beschränkt.

Indirekte Sichtsysteme für Fahrzeuge werden bei einer bekannten Bau- bzw. Anbringweise an einem Karosserieteil eines Fahrzeugs über eine Befestigungsvorrichtung abgestützt. Die Befestigungsvorrichtung kann nach Art eines Tragarms ausgebildet sein, der mit einem seiner Enden seitens der Fahrzeugkarosserie festgelegt ist und mit seinem anderen freien Ende das indirekte Sichtsystem trägt.

Sowohl zu Verstellzwecken als auch zum Zweck des Kollisions- oder Unfallschutzes sind derartige Tragarme gegenüber der Karosserie schwenk- oder drehbeweglich ausgeführt. Hierzu wird eine Lageranordnung verwendet, die den Tragarm oder Auslegerarm dreh- oder schwenkbeweglich führt. Zur Sicherstellung definierter Betriebsstellungen oder Betriebslagen weisen derartige Lageranordnungen oftmals eine als Verrastung wirkende Verrastungsgeometrie auf, welche unter Federspannung steht. Diese Verrastung muss im Betrieb in der Lage sein, regulär auf sie einwirkende Kräfte aufzunehmen, um das indirekte Sichtsystem in seiner Betriebsposition zu halten. Unter "regulär einwirkende Kräfte" seien hier insbesondere die im Fahrbetrieb auftretenden Windkräfte, Vibrationen oder dergleichen verstanden.

Bei Überschreiten eines auf die Lagervorrichtung einwirkenden Kraftgrenzwerts wird die federinduzierte Verrastungswirkung der Lageranordnung aufgehoben, so dass beispielsweise bei einer Kollision mit einem Hindernis, einem starken Stoß oder Schlag oder dergleichen der Tragarm und damit das indirekte Sichtsystem eine entsprechende Ausweichbewegung ausüben kann. Groß bauende indirekte Sichtsysteme, beispielsweise großflächige Spiegelsysteme können im Betrieb insbesondere durch ihren Luftwiderstand aber auch durch ihr Eigengewicht vergleichsweise hohe Kräfte, das heißt Momente auf die Lageranordnung ausüben, welche sowohl im Sinne einer Entrastung der dortigen Verrastungsvorrichtung oder Verrastungsgeometrie wirken, als auch die Lageranordnung an sich mit Biegemomenten belasten. Um sicherzustellen, dass die Betriebsposition des Trag- oder Auslegerarms sicher beibehalten wird und/oder die Lageranordnung die Momentenbelastung aufnehmen kann, müssen die jeweiligen Wirkflächen in der Verrastungsgeometrie und/oder Stützflächen in der Lageranordnung entsprechend groß ausgelegt werden. Dies hat unmittelbar zur Folge, dass bei einer häufigen Benutzung des Drehlagers ein entsprechend hoher Verschleiß dieser Wirkflächen erfolgt. Weiterhin bedingen große Wirkflächen entsprechend große Lagerabmessungen, was oftmals aus Designgründen unerwünscht ist.

Die DE 10 2010 055529 A1 offenbart ein Rastgelenk für Sitz- oder Liegemöbel mit einer Verrastung durch zwei Zahnkränze, das in einer gesperrten Stellung in einer Richtung verschwenkt werden kann und beim Erreichen einer Endstellung durch ineinandergreifende Nocken entsperrt wird, um das Rastgelenk in die Ausgangsstellung bringen zu können. Die ineinandergreifenden Nocken dienen lediglich der Entsperrung des Rastgelenks, die Verrastung wird hingegen durch die zwei Zahnkränze allein bewirkt und nicht durch die ineinandergreifenden Nocken unterstützt.

Ausgehend von der DE 10 2010 055529 A1 ist es somit Aufgabe der vorliegenden Erfindung, eine Lageranordnung der in Frage stehenden Art so auszugestalten, dass diese mit geringem Bauraum auch hohen Belastungen in der Betriebsposition standhalten kann und eine hohe Verschleißfestigkeit aufweist.

Erfindungsgemäß wird daher zur Lösung dieser Aufgabe eine Lageranordnung zur dreh- oder schwenkbeweglichen Verbindung eines ersten und eines zweiten Bauteils miteinander geschaffen, wobei die beiden Bauteile über ein koaxial zu einer Dreh- oder Schwenkachse liegendes Verbindungselement verbunden sind; jedes der beiden Bauteile jeweils mindestens einen ersten Kontaktbereich aufweist, wobei die Kontaktbereiche zueinander komplementäre erste Anlageflächen haben; die jeweiligen ersten Anlageflächen durch ein Vorspannteil mit einer elastischen Vorspannkraft aufeinander zu belastet sind; und zwischen den ersten Anlageflächen eine als erste Verrastung wirkende Verrastungsgeometrie angeordnet ist. Erfindungsgemäß weist weiterhin jedes der beiden Bauteile jeweils mindestens einen zweiten Kontaktbereich auf, wobei die zweiten Kontaktbereiche zweite Anlageflächen haben, welche in Wechselwirkung miteinander bringbar sind. Jeder der zweiten Kontaktbereiche liegt bezüglich der Dreh- oder Schwenkachse radial weiter außen als die ersten Kontaktbereiche und die zweiten Anlageflächen der zweiten Kontaktbereiche sind nur in wenigstens einer definierten Relativstellung der beiden Bauteile zueinander in Anlage und damit in Wechselwirkung miteinander. In der wenigstens einen definierten Relativstellung sind die ersten Anlageflächen der ersten Kontaktbereiche zueinander in Wirkeingriff und gleichzeitig die zweiten Anlageflächen der zweiten Kontaktbereiche zueinander in Wirkeingriff.

Die Wechselwirkung der zweiten Anlageflächen miteinander ist im Rahmen der vorliegenden Erfindung als eine Interaktion dieser Anlageflächen zu verstehen, welche als Hemm-, Brems-, Verrastungs- oder Abstützungswirkung oder als Kombination derartiger Wirkungen im Bereich der Dreh- oder Schwenkachse wirkt. Diesbezügliche Wirkungen zwischen den ersten Anlageflächen und/oder im Bereich der Dreh- oder Schwenkachse werden somit ergänzt und/oder unterstützt.

Mit anderen Worten, durch die zweiten Kontaktbereiche, deren zweite Anlageflächen nur in wenigstens einer definierten Relativstellung der beiden Bauteile zueinander in Anlage miteinander sind, wobei diese in zweiten Kontaktbereiche bezüglich der Dreh- oder Schwenkachse radial weiter außen liegen als die ersten Kontaktbereiche, erfolgt eine Unterstützung beispielsweise der Verrastungswirkung im Bereich einer von den ersten Anlageflächen gebildeten ersten Verrastung, wobei diese Verrastungsunterstützung nur in wenigstens einer definierten Relativstellung der beiden Bauteile zueinander wirksam ist. Diese definierte Relativstellung der beiden Bauteile zueinander ist bevorzugt diejenige Relativstellung, welche wenigstens einer Betriebsposition der beiden Bauteile zueinander entspricht. Dadurch, dass die zweiten Kontaktbereiche bezüglich der Dreh- oder Schwenkachse radial weiter außen liegen als die ersten Kontaktbereiche, können im Fall einer Verrastung die zweiten Anlageflächen beziehungsweise die von ihnen definierte oder gebildete zweite Verrastung ein vergleichsweise hohes Hemm- oder Sperrmoment aufbringen. Damit ist die Betriebsposition der beiden Bauteile zueinander stabil gehalten. Dadurch, dass die zweiten Kontaktbereiche bezüglich der Dreh- oder Schwenkachse radial weiter außen liegen als die ersten Kontaktbereiche, erfolgt auch eine wirksame Abstützung und Entlastung der Lagerung im Bereich der Dreh- oder Schwenkachse gegenüber wind- oder gewichtskraftinduzierten Belastungen, speziell Biegemomenten, wobei diese Abstützung und Entlastung vorteilhafterweise speziell der Betriebsposition der beiden Bauteile zueinander entspricht.

"Verrastung" und "Abstützung" seien hier lediglich als Beispiele für erzielbare Wechselwirkungen der zweiten Anlageflächen miteinander genannt.

Die zweiten Anlageflächen sind bei einer Anlage miteinander in der wenigstens einen definierten Relativstellung der beiden Bauteile zueinander derart miteinander in Wechselwirkung, dass sie diese Relativstellung (definiert) sichern, was eine bevorzugte Ausgestaltung der Wechselwirkung darstellen kann.

Diese Sicherung der wenigstens einen Relativstellung kann - wie bereits exemplarisch ausgeführt - eine aufhebbare Lagefixierung der beiden Bauteile zueinander und/oder eine zusätzlich Abstützung, insbesondere Momentabstützung der dreh- oder schwenkbeweglichen Verbindung der beiden Bauteile im Bereich der Dreh- oder Schwenkachse umfassen.

Die aufhebbare Lagefixierung der beiden Bauteile kann bevorzugt durch eine als zweite Verrastung wirkende Verrastungsgeometrie zwischen den zweiten Anlageflächen erfolgen.

Bevorzugt haben die ersten Kontaktbereiche mit den sich hierin befindlichen ersten Anlageflächen jeweils die Form eines zur Dreh- oder Schwenkachse konzentrischen Rings und die zweiten Kontaktbereiche mit den sich hierin befindlichen zweiten Anlageflächen liegen radial beabstandet zum Außenumfang des Rings. Hierdurch ist eine platzsparende Bauweise möglich, sowie auf Grund der Ringform der ersten Kontaktbereiche eine Verrastungswirkung oder ein Verrastungsbereich, der sich gegebenenfalls über volle 360 Grad erstrecken kann.

Umgeben die zweiten Kontaktbereiche mit den sich hierin befindlichen Anlageflächen die ersten Kontaktbereiche (ebenfalls) ringförmig, insbesondere ringsegmentförmig, wobei im Fall einer ringsegmentförmigen Ausgestaltung der zweiten Kontaktbereiche die hierdurch gebildeten Ringsegmente symmetrisch zur Dreh- oder Schwenkachse liegen können, sind definierte Relativlagen der ersten und zweiten Bauteile zueinander auswählbar, welche von den zweiten Kontaktbereichen beziehungsweise den sich hierin befindlichen zweiten Anlageflächen dann zusätzlich z.B. verrastungsgesichert sind.

Wenigstens einer der ersten Kontaktbereiche mit der sich hierin befindlichen ersten Anlagefläche kann bezüglich der Dreh- oder Schwenkachse radial innerhalb einer umlaufenden Dichtung liegen. Hierdurch ist wenigstens der erste Kontaktbereich vor schädlichen Umwelteinflüssen und damit erhöhtem Verschleiß geschützt. Bevorzugt kann der von der umlaufenden Dichtung begrenzte Raum noch ein Schmiermittel enthalten, welches den Verschleiß weiter reduzieren kann.

Die Verrastungsgeometrie zwischen den beiden ersten Anlageflächen kann durch eine erste Rastverzahnung und die Verrastungsgeometrie zwischen den beiden zweiten Anlageflächen kann durch eine zweite Rastverzahnung gebildet sein. Derartige Rastverzahnungen sind herstellungstechnisch unproblematisch, exakt zu gestalten und haben eine hohe Zuverlässigkeit.

Sind die Flankensteigungen der Zähne in der ersten und der zweiten Rastverzahnung zueinander unterschiedlich, wobei besonders bevorzugt die Flankensteigung der ersten Rastverzahnung größer als diejenige der zweiten Rastverzahnung ist, ergibt sich der Vorteil, dass bei einer Betätigung der Lageranordnung, das heißt bei einer Relativverschwenkung der beiden Bauteile zueinander, die Wirkflächen der zweiten Rastverzahnung nicht in Kontakt miteinander sind. Hierdurch wird unnötiger Verschleiß dieser Wirkflächen vermieden. Darüber hinaus benötigen diese Wirkflächen auch keine Abdichtung nach außen hin und/oder eine zusätzliche Schmierung, was den Bau- und Wartungsaufwand der Lageranordnung verringert.

Der erste beziehungsweise zweite Kontaktbereich kann einteilig an dem ersten beziehungsweise zweiten Bauteil ausgebildet sein. Dies ist insbesondere vom herstellungstechnischen Standpunkt her eine bevorzugte Ausgestaltungsform.

Alternativ hierzu kann der erste beziehungsweise zweite Kontaktbereich jeweils ein zu dem ersten beziehungsweise zweiten Bauteil separates Element sein, welches mit dem ersten beziehungsweise zweiten Bauteil drehfest verbunden ist. Hierdurch ist es möglich, ungeachtet des Materials, aus welchem das jeweilige erste und/oder zweite Bauteil besteht, für den ersten beziehungsweise zweiten Kontaktbereich Materialien bzw. Materialpaarungen zu verwenden, welche den jeweiligen Anforderungen optimal angepasst sind.

Gegenstand der vorliegenden Erfindung ist weiterhin eine Befestigungsvorrichtung zur Anbringung eines Anbauteils an einem Fahrzeug mit wenigstens einem fahrzeugseitigem Bauteil und wenigstens einem anbauteilseitigen Bauteil, wobei diese beiden Bauteile über wenigstens eine Lageranordnung gemäß der vorliegenden Erfindung miteinander verbunden sind.

Weiterhin ist ein Anbauteil für Fahrzeuge, insbesondere Nutzfahrzeuge, mit einer Befestigungsvorrichtung gemäß der vorliegenden Erfindung vorgesehen.

Weitere Einzelheiten, Aspekte und Vorteile der vorliegenden Erfindung ergeben sich besser aus der nachfolgenden Beschreibung anhand der Zeichnung.

Es zeigt:
Fig. 1 in einer schematischen Teilschnittansicht Aufbau beziehungsweise Anordnung einer erfindungsgemäßen Lageranordnung;
Fig. 2 schematisch vereinfacht eine Draufsicht von oben auf eine erfindungsgemäße Lageranordnung gemäß einer Ausgestaltungsform;
Fig. 3 eine Fig. 2 entsprechende Ansicht einer weiteren Ausgestaltungsform;
Fig. 4 und Fig. 5 schematisch stark vereinfacht die Relativlagen der Wirkflächen in den jeweiligen Verrastungsgeometrien in der Betriebsposition beziehungsweise der Drehposition;
Fig. 6 eine graphische Darstellung zur Veranschaulichung der jeweiligen Steigungen in den beiden Verrastungsgeometrien;
Fig. 7 eine Seitenansicht auf eine erfindungsgemäße Lageranordnung beziehungsweise Befestigungsvorrichtung;
Fig. 8 eine perspektivische Ansicht von schräg oben auf das in Fig. 7 linke (fahrzeugseitige) Bauteil mit einer Ansicht der dortigen Lageranordnung;
Fig. 9 eine Schnittansicht durch die Lageranordnung von Fig. 7; und
Fig. 10 eine den Figuren 2 oder 3 entsprechende Ansicht einer weiteren Ausgestaltungsform.

In den einzelnen Figuren der Zeichnung, welche zueinander nicht durchgängig maßstabs- beziehungsweise größenidentisch sind, bezeichnen gleiche Bezugszeichen gleiche oder einander entsprechende Elemente, Bauteile oder Abschnitte.

Eine in der Zeichnung insgesamt mit 2 bezeichnete Lageranordnung dient zur dreh- oder schwenkbeweglichen Verbindung zweier Bauteile, nämlich einem ersten Bauteil 4 und einem zweiten Bauteil 6 miteinander. Die Dreh- oder Schwenkbewegung der beiden Bauteile 4 und 6 zueinander erfolgt hierbei um eine Achse A.

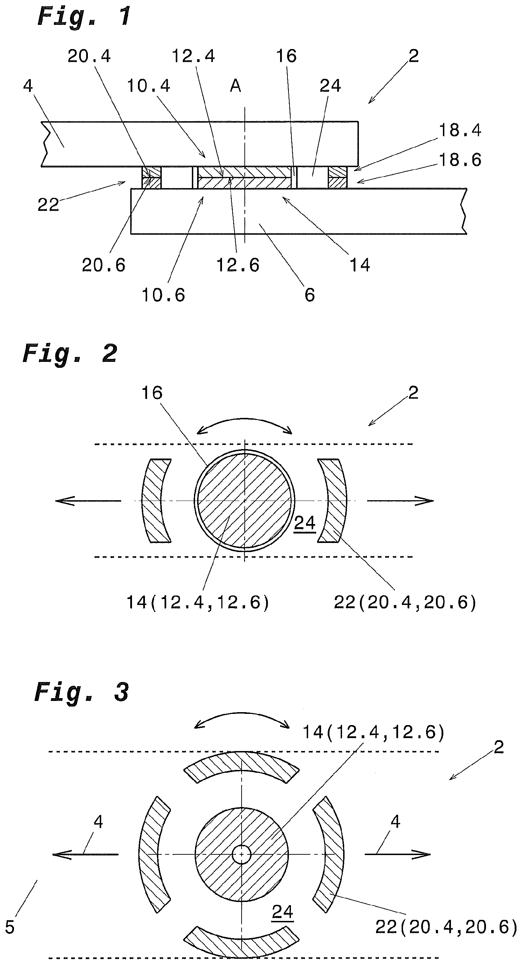

Im dargestellten Anwendungsbeispiel und zum Zweck der nachfolgenden Beschreibung, welche jedoch nicht hierauf eingeschränkt zu verstehen ist, seien die beiden Bauteile 4 und 6 Teile eines Trag- oder Auslegerarms eines indirekten Sichtsystems für Fahrzeuge. Hierbei kann das Bauteil 6 ein fahrzeugkarosserieseitiges Bauteil sein, welches mit seinem in Fig. 1 rechten (nicht dargestellten) Ende an einem Karosserieteil eines Fahrzeugs festgelegt ist. Das Bauteil 4 ist ein sichtsystemseitiges Bauteil, welches an seinem in Fig. 1 linken, nicht dargestellten Ende ein indirektes Sichtsystem trägt, beispielsweise einen Außenspiegel, eine Rückfahrkamera oder dergleichen.

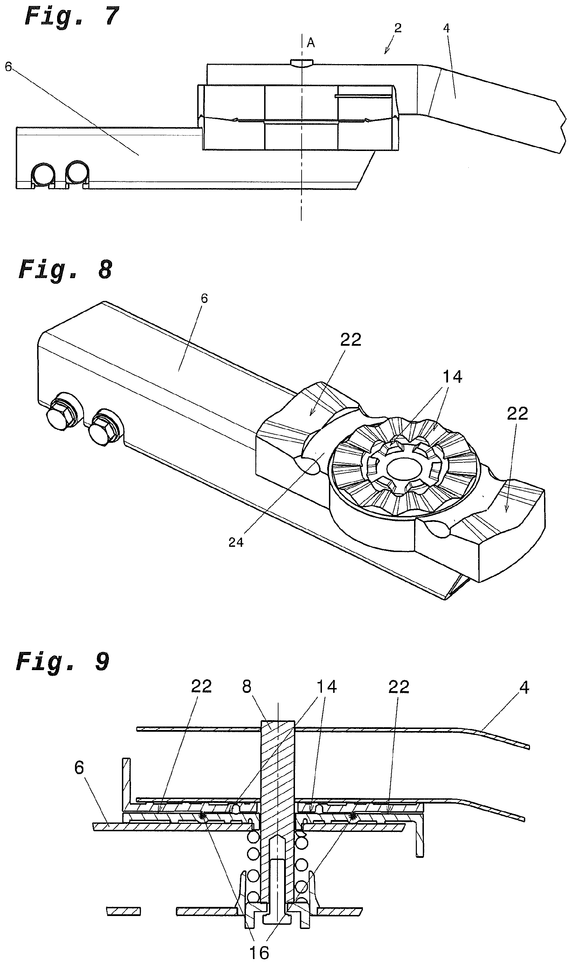

Die Verbindung der beiden Bauteile 4 und 6 miteinander erfolgt über ein koaxial zur Achse A liegendes Verbindungselement 8 (Fig. 9) in Form eines Bolzens, einer Schraube oder dergleichen. Diese Verbindung ist in bekannter Weise in Axialrichtung des Verbindungselements 8 federbelastet. Die Federbelastung erfolgt beispielsweise durch eine Schraubendruckfeder, wie in der Figur dargestellt, oder durch Tellerfedern oder andere Kraftspeicherelemente. Bau- und Wirkungsweisen solcher federbelasteter Verbindungen sind allgemein bekannt, so dass hier nicht näher darauf eingegangen werden soll.

Das Verbindungselement 8 durchsetzt hierbei einen ersten Kontaktbereich 10.4 seitens des ersten Bauteils 4 und einen ersten Kontaktbereich 10.6 seitens des zweiten Bauteils 6. Die beiden Kontaktbereiche 10.4 und 10.6 weisen jeweils zueinander komplementäre erste Anlageflächen 12.4 seitens des ersten Bauteils 4 und 12.6 seitens des zweiten Bauteils 6 auf. Zwischen den Anlageflächen 12.4 und 12.6 wirkt im dargestellten Ausführungsbeispiel eine als erste Verrastung 14 dienende Verrastungsgeometrie. Wie am besten aus Fig. 8 hervorgeht, wird die erste Verrastung 14 (hier seitens des zweiten Bauteils 6) durch eine Anzahl von Rastvorsprüngen oder Rastzähnen gebildet, welche kreisringförmig koaxial zur Achse A umlaufend ausgebildet sind. Am Außenumfang der ersten Verrastung 14 ist eine ringförmig umlaufende Dichtung 16 angeordnet, welche das Innere der ersten Verrastung 14 nach außen hin abdichtet. Der von der Dichtung 16 gekapselte Innenraum der ersten Verrastung 14 kann mit einem geeigneten Schmiermittel gefüllt sein.

Die Dichtung 16 kann als separates Dichtelement, z.B. in Form eines O-Rings ausgebildet sein, der in einer entsprechenden Dichtrille liegt. Genausogut kann die Dichtung durch ineinander greifende, umlaufende Profile seitens der Kontaktbereiche 10.4 und 10.6 gebildet sein, welche in Zusammenwirkung eine Labyrinthdichtung bilden. Ein separates Dichtelement wird hierdurch entbehrlich, was den Montage- und Wartungsaufwand verringert und die Lebensdauer erhöht.

Es sei festzuhalten, dass die dargestellte und beschriebene Verrastungsgeometrie der ersten Verrastung 14 nur als Ausführungsbeispiel zu verstehen ist. Generell kann zwischen den Anlageflächen 12.4 und 12.6 jede Art von Wirk- und/oder Stützmechanismus definiert sein, also auch Hemm-, Reib- oder Stützflächen oder dergleichen.

Zusätzlich zu den ersten Kontaktbereichen 10.4 und 10.6 sind zweite Kontaktbereiche 18.4 und 18.6 vorgesehen, welche zweite Anlageflächen 20.4 und 20.6 aufweisen, die wie die ersten Anlageflächen 12.4 und 12.6 zueinander komplementär sind und im dargestellten Ausführungsbeispiel eine zweite Verrastung 22 bilden.

Auch hier sei festzuhalten, dass die dargestellte und beschriebene Verrastungsgeometrie der zweiten Verrastung 22 nur als Ausführungsbeispiel zu verstehen ist. Generell kann zwischen den Anlageflächen 20.4 und 20.6 analog zu den ersten Anlageflächen 12.4 und 12.6 jede Art von Wirk- und/oder Stützmechanismus definiert sein, also auch Hemm-, Reib- oder Stützflächen oder dergleichen.

Die zweiten Anlageflächen 20.4 und 20.6, welche im Ausführungsbeispiel zwischen sich die zweite Verrastung 22 bilden oder definieren, sind - analog zur ersten Verrastung 14 - durch ein Verzahnungsprofil in den jeweiligen Anlageflächen 20.4 und 20.6 gebildet.

Das Verzahnungsprofil der zweiten Verrastung 22 liegt auf einem zum Verzahnungsprofil in der ersten Verrastung 14 beziehungsweise zur Achse A konzentrischen Kreis radial beabstandet vom Außenumfang der ersten Verrastung 14, wie am besten aus den Figuren 2, 3 und 8 hervorgeht.

Zwischen den Verrastungen 14 und 22 ist demnach ein Freiraum oder Übergangsbereich 24 definiert.

Die Teilungen der jeweiligen Verzahnungen in den Verrastungen 14 und 22 können zueinander gleich sein. Sie können auch unterschiedlich sein, wobei dann etwa gemäß Fig. 8 die Teilung der Verzahnung in der zweiten Verrastung 22 größer als diejenige in der ersten Verrastung 14 ist.

Weiterhin ist gemäß einer besonders bevorzugten Ausgestaltungsform der vorliegenden Erfindung die Steigung der Wirkflächen in der Verzahnung der ersten Verrastung 14 größer als in der zweiten Verrastung 22. Sei die Steigung der Wirkflächen in der ersten Verrastung mit S14 bezeichnet und die Steigung der Wirkflächen in der zweiten Verrastung 22 mit S22, so gilt S14 > S22. Die "Steigung" der Wirkflächen in der Verrastung ist hierbei der theoretische spiralförmige Weg, den die Rast- oder Wirkfläche (entspricht einer schraubenförmigen Fläche) in einer Umdrehung um die Achse A zurücklegen würde.

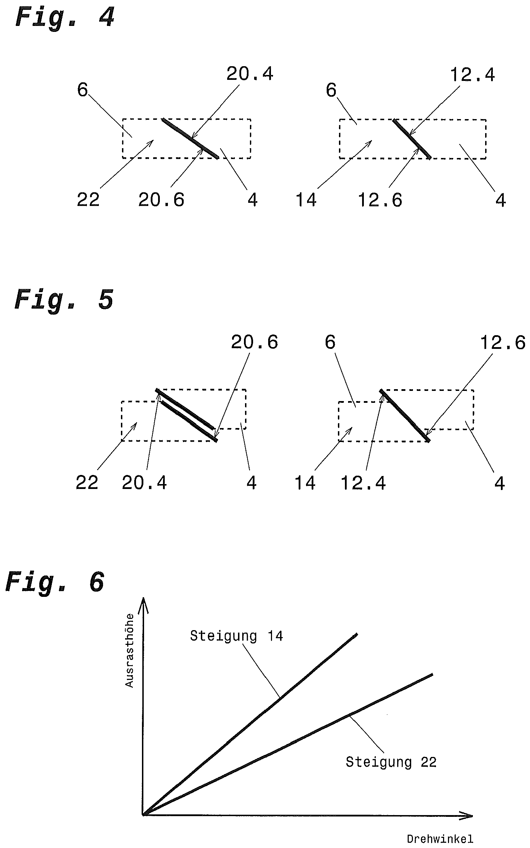

Die Figuren 4 bis 6 zeigen den sich aus diesen unterschiedlichen Steigungen ergebenden Vorteil. Hierbei zeigt Fig. 4 die Betriebsposition der beiden Bauteile 4 und 6 zueinander, das heißt diejenige Position, welche dem normalen Betriebszustand der Lageranordnung 2 entspricht, in welcher die beiden Bauteile 4 und 6 beispielsweise gestreckt/kollinear oder in einem bestimmten Winkel zueinander stehen, wobei das Bauteil 4 an seinem freien Ende das indirekte Sichtsystem oder ein vergleichbares Zubehörteil trägt. Die beiden Verrastungen 14 und 22 sind mit ihren jeweiligen Wirkflächen in Anlage miteinander, so dass beide Verrastungen 14 und 22 im Wirkeingriff sind und die Lageranordnung 2 in der Betriebsposition sicher drehfixieren. Darüber hinaus erfolgt gegebenenfalls eine Momentenabstützung der beiden Bauteile 4 und 6.

Bei einer erzwungenen Verdrehung beispielsweise des ersten Bauteils 4 relativ zum zweiten Bauteil 6 um die Achse A gleiten die Wirkflächen in der ersten Verrastung 14 aufeinander ab. Durch die höhere Steigung der Wirkflächen der ersten Verrastung 14 gelangen hierbei gemäß Fig. 5 die Wirkflächen der zweiten Verrastung 22 außer Eingriff miteinander, das heißt, die zweiten Anlageflächen 20.4 und 20.6 trennen sich voneinander, so dass jegliche Verrastungswirkung der zweiten Verrastung 22 aufgehoben ist.

Hieraus ergibt sich der Vorteil, dass die Wirkflächen in der zweiten Verrastung 22 selbst bei häufiger Betätigung der Lageranordnung 2 keinerlei Verschleiß unterworfen sind, so dass die zweite Verrastung 22 eine sehr hohe Lebensdauer haben kann und bei der Ausgestaltung der Lageranordnung 2 kein besonderes Augenmerk auf hohe Abriebfestigkeit der dortigen Materialien gerichtet werden muss. Darüber hinaus sind Abdicht- und Schmiermaßnahmen im Bereich der zweiten Verrastung 22 entbehrlich.

Die jeweiligen zweiten Anlageflächen 20.4 und 20. 6 in der zweiten Verrastung 2 müssen nicht durchgehend ringförmig um die erste Verrastung 14 herum verlaufend ausgebildet sein, sondern können etwa gemäß den Figuren 2 und 8 in Form zweier Ringsegmentabschnitte ausgebildet sein. Fig. 3 zeigt die Möglichkeit der Anordnung von insgesamt vier Ringsegmentabschnitten der zweiten Anlageflächen 20.n um die erste innenliegende Verrastung 14 herum.

In den Figuren 2 und 3 ist die Anordnung der Ringsegmentabschnitte der zweiten Anlageflächen 20.n symmetrisch bezüglich der Achse A. Bei der Ausgestaltung von Fig. 2 kann die Lage der beiden Ringsegmentabschnitte auch um 90 Grad oder in einem anderen beliebigen Winkel zueinander versetzt sein. Weiterhin kann bei der Ausgestaltung von Fig. 2 auch auf eines der beiden Ringsegmente verzichtet werden.

Die Lage der Ringsegmente der zweiten Anlageflächen 20.n beziehungsweise 20.4 und 20.6 definiert die besonders gesicherte Betriebsposition des ersten Bauteils 4 relativ zum zweiten Bauteil 6. In der Ausgestaltungsform von Fig. 2 wäre diese gesicherte Betriebsposition eine gestreckt/kollineare Anordnung des ersten Bauteils 4 zum zweiten Bauteil 6, wie beispielsweise in Fig. 7 gezeigt. Bei der Ausgestaltung von Fig. 3 wäre sowohl die genannte gestreckte/kollineare Anordnung als auch eine beidseits um 90 Grad hierzu verdrehte Stellung besonders gesichert. In sämtlichen Zwischenlagen ist die Lageranordnung 2 vergleichsweise leichtgängig, da durch den anhand der Figuren 4 und 5 geschilderten Mechanismus der unterschiedlichen Steigungen in den Zwischenlagen die zweite Verrastung 22 außer Funktion gesetzt ist.

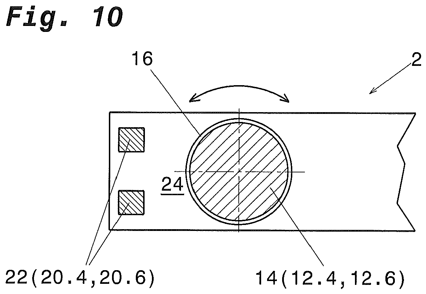

Figur 10 zeigt die Möglichkeit einer nicht symmetrischen Anordnung der zweiten Verrastung 22 bzw. zweiten Anlageflächen 20.4 und 20.6 relativ zur Achse A. Die zweiten Anlageflächen 20.4 und 20.6 liegen hier beispielsweise als Paar auf einer Seite der Achse A bzw. der ersten Verrastung A.

Es sind auch Kombinationen der Ausgestaltungsformen der Figuren 2 bzw. 3 und 10 miteinander denkbar.

In dem Freiraum- oder Übergangsbereich 24 kann sich ein in der Zeichnung nicht näher dargestellter Übergangsbereich befinden, beziehungsweise kann ein derartiger Übergangsbereich ausgestaltet sein, der einen Übergang zwischen dem Profil der Wirkflächen in der ersten Verrastung 14 und demjenigen der zweiten Verrastung 22 bildet.

Hervorzuheben ist nochmals, dass die Möglichkeit einer Verrastung zwischen den beiden Bauteilen 4 und 6 nur als Ausführungsbeispiel zu verstehen ist. Die jeweiligen Anlageflächen 12.4 und 12.6 bzw. 20.4 und 20.6 können auch andere Funktionen haben und beispielsweise als Reib- oder Hemmflächen und/oder reine Stützflächen dienen. Abhängig hiervon sind Ausgestaltung und/oder Formgebung und/oder Anordnung und/oder Material bzw. Materialpaarung der Anlageflächen 12.4 und 12.6 bzw. 20.4 und 20.6 gestalt- oder wählbar.

Weiterhin versteht sich, dass die Ausgestaltung der ersten Verrastung 14 und der zweiten Verrastung 22 nicht zwingend auf die im Ausführungsbeispiel dargestellte Verzahnung beschränkt ist. Es sind auch andere Rastgeometrien in Form definierter Flächen denkbar. Weiterhin können auch Kugelrastungen oder ähnliche Verrastungselemente zum Einsatz gelangen. Derartige andere Ausgestaltungsformen können die dargestellte Verzahnung ganz oder teilweise ersetzen und/oder in Kombination hiermit verwendet werden.

Die ersten Kontaktbereiche 10.4 und 10.6 und die zweiten Kontaktbereiche 18.4 und 18.6 können einteilig mit dem Material der jeweiligen ersten und zweiten Bauteile 4 und 6 ausgebildet sein. Genauso gut können diese Kontaktbereiche auch als separate Elemente ausgebildet sein, welche aus dem gleichen oder einem unterschiedlichem Material zu den Bauteilen 4 und 6 gefertigt sind und welche mit den jeweiligen Bauteilen 4 und 6 drehfest verbunden sind. Hierdurch können entsprechende Materialpaarungen im Bereich der Anlageflächen oder Verrastungen gewählt werden, die für den jeweiligen Einsatzzweck optimiert sind.

Dadurch, dass die zweite Verrastung 22 in Form der beiden Anlageflächen 20.4 und 20.6 einen vergleichsweise großen radialen Abstand zur Achse A hat, kann diese zweite Verrastung hohe Momente aufnehmen oder abfangen beziehungsweise ein hohes Haltemoment auf eine Verdrehbewegung in der Lageranordnung 2 aufbringen. Dennoch ist die gesamte Lageranordnung 2 insbesondere in der Ausgestaltung der Figuren 2, 7, 8 und 10 platzsparend und kompakt.

### Bezugszeichenliste

A Achse
2 Lageranordnung
4 erstes Bauteil
6 zweites Bauteil
8 Verbindungselement
10.4, 10,.6 erster Kontaktbereich
12.4, 12,6 erste Anlagefläche
14 erste Verrastung
16 Dichtung
18.4, 18.6 zweiter Kontaktbereich
20.4, 20.6 zweite Anlagefläche
22 zweite Verrastung
24 Übergangsbereich

## Patentansprüche

1. Lageranordnung zur dreh- oder schwenkbeweglichen Verbindung eines ersten (4) und eines zweiten (6) Bauteils miteinander, wobei
die beiden Bauteile (4, 6) über ein koaxial zu einer Dreh- oder Schwenkachse (A) liegendes Verbindungselement (8) verbunden sind;
jedes der beiden Bauteile (4, 6) jeweils mindestens einen ersten Kontaktbereich (10.4, 10.6) aufweist, wobei die Kontaktbereiche (10.4, 10.6) zueinander komplementäre erste Anlageflächen (12.4, 12.6) haben;
die jeweiligen ersten Anlageflächen (12.4, 12.6) durch ein Vorspannteil mit einer elastischen Vorspannkraft aufeinander zu belastet sind; und
zwischen den ersten Anlageflächen (12.4, 12.6) eine als erste Verrastung (14) wirkende Verrastungsgeometrie angeordnet ist, wobei jedes der beiden Bauteile (4, 6) jeweils mindestens einen zweiten Kontaktbereich (18.4. 18.6) aufweist, wobei die zweiten Kontaktbereiche (18.4. 18.6) zweite Anlageflächen (20.4, 20.6) haben, welche in Wechselwirkung miteinander bringbar sind;
jeder der zweiten Kontaktbereiche (18.4. 18.6) bezüglich der Dreh- oder Schwenkachse (A) radial weiter außen liegt als die ersten Kontaktbereiche (10.4. 10.6); **dadurch gekennzeichnet,**
**dass** die zweiten Anlageflächen (20.4, 20.6) der zweiten Kontaktbereiche (18.4. 18.6) nur in wenigstens einer definierten Relativstellung der beiden Bauteile (4, 6) zueinander in Anlage und damit Wechselwirkung miteinander sind; und
**dass** in der wenigstens einen definierten Relativstellung die ersten Anlageflächen (12.4, 12.6) der ersten Kontaktbereiche (10.4, 10.6) zueinander im Wirkeingriff sind und gleichzeitig die zweiten Anlageflächen (20.4, 20.6) der zweiten Kontaktbereiche (18.4, 18.6) zueinander im Wirkeingriff sind.

2. Lageranordnung nach Anspruch 1, **dadurch gekennzeichnet, dass** die zweiten Anlageflächen (20.4, 20.6) bei einer Anlage miteinander in der wenigstens einen definierten Relativstellung der beiden Bauteile (4, 6) zueinander derart zueinander komplementär sind, dass sie diese Relativstellung sichern.

3. Lageranordnung nach Anspruch 2, **dadurch gekennzeichnet, dass** die Sicherung der wenigstens einen Relativstellung eine aufhebbare Lagefixierung der beiden Bauteile (4, 6) zueinander und/oder eine zusätzliche Abstützung, insbesondere Momentabstützung der dreh- oder schwenkbeweglichen Verbindung der beiden Bauteile im Bereich der Dreh- oder Schwenkachse (A) umfasst.

4. Lageranordnung nach Anspruch 3, **dadurch gekennzeichnet, dass** die aufhebbare Lagefixierung der beiden Bauteile (4, 6) durch eine als zweite Verrastung (22) wirkende Verrastungsgeometrie zwischen den zweiten Anlageflächen (20.4, 20.6) erfolgt.

5. Lageranordnung nach einem der Ansprüche 1 bis 4, **dadurch gekennzeichnet, dass** die ersten Kontaktbereiche (10.4, 10.6) mit den sich hierin befindlichen ersten Anlageflächen (12.4, 12.6) jeweils die Form eines zur Dreh- oder Schwenkachse (A) konzentrischen Rings haben und die zweiten Kontaktbereiche (18.4. 18.6) mit den sich hierin befindlichen zweiten Anlageflächen (20.4, 20.6) radial beabstandet zum Außenumfang des Rings liegen.

6. Lageranordnung nach einem der Ansprüche 1 bis 5, **dadurch gekennzeichnet, dass** die zweiten Kontaktbereiche (18.4. 18.6) mit den sich hierin befindlichen zweiten Anlageflächen (20.4, 20.6) die ersten Kontaktbereiche (10.4, 10.6) ringförmig, insbesondere ringsegmentförmig umgeben.

7. Lageranordnung nach Anspruch 6, **dadurch gekennzeichnet, dass** die Ringsegmente der zweiten Anlageflächen (20.4, 20.6) symmetrisch zu der Dreh- oder Schwenkachse (A) liegen.

8. Lageranordnung nach Anspruch 7, **dadurch gekennzeichnet, dass** die Lage der Ringsegmente wenigstens einer definierten Betriebsposition der beiden Bauteile (4, 6) zueinander entspricht.

9. Lageranordnung nach einem der Ansprüche 1 bis 8, **dadurch gekennzeichnet, dass** wenigstens einer der ersten Kontaktbereiche (10.4, 10.6) mit der sich hierin befindlichen ersten Anlagefläche (12.4, 12.6) bezüglich der Dreh- oder Schwenkachse (A) radial innerhalb einer umlaufenden Dichtung (16) liegt.

10. Lageranordnung nach Anspruch 9, **dadurch gekennzeichnet, dass** sich in dem von der umlaufenden Dichtung (16) begrenzten Raum ein Schmiermittel befindet.

11. Lageranordnung nach einem der Ansprüche 4 bis 10, **dadurch gekennzeichnet, dass** die Verrastungsgeometrie zwischen den beiden ersten Anlageflächen (12.4, 12.6) durch eine erste Rastverzahnung und die Verrastungsgeometrie zwischen den beiden zweiten Anlageflächen (20.4. 20.6) durch eine zweite Rastverzahnung gebildet ist.

12. Lageranordnung nach Anspruch 11, **dadurch gekennzeichnet, dass** die Flankensteigungen (S14, S22) der Zähne in der ersten und der zweiten Rastverzahnung zueinander unterschiedlich sind.

13. Lageranordnung nach Anspruch 12, **dadurch gekennzeichnet, dass** die Flankensteigung (S14) der ersten Rastverzahnung größer als diejenige (S22) der zweiten Rastverzahnung ist.

14. Lageranordnung nach einem der Ansprüche 11 bis 13, **dadurch gekennzeichnet, dass** die Zahnteilung in der ersten Rastverzahnung unterschiedlich zu derjenigen der zweiten Rastverzahnung ist.

15. Lageranordnung nach einem der Ansprüche 1 bis 14, **dadurch gekennzeichnet, dass** der erste bzw. zweite Kontaktbereich (10.n, 18.n) einteilig an dem ersten bzw. zweiten Bauteil (4, 6) ausgebildet ist.

16. Lageranordnung nach einem der Ansprüche 1 bis 14, **dadurch gekennzeichnet, dass** der erste bzw. zweite Kontaktbereich (10.n, 18.n) jeweils ein zu dem ersten bzw. zweiten Bauteil (4, 6) separates Element ist, welches mit dem ersten bzw. zweiten Bauteil (4, 6) drehfest verbunden ist.

17. Lageranordnung nach Anspruch 16, **dadurch gekennzeichnet, dass** die Kontaktbereiche (10.n, 18.n) und die Bauteile (4, 6) aus unterschiedlichen Materialien gebildet sind.

18. Befestigungsvorrichtung zur Anbringung wenigstens eines Anbauteils an einem Fahrzeug, mit wenigstens einem fahrzeugseitigen Bauteil (4) und wenigstens einem anbauteilseitigen Bauteil (6), wobei die Bauteile über wenigstens eine Lageranordnung (2) nach einem der Ansprüche 1 bis 17 miteinander verbunden sind.

19. Anbauteil für Fahrzeuge, insbesondere Nutzfahrzeuge, mit einer Befestigungsvorrichtung nach Anspruch 18.

## Claims

1. A bearing assembly for rotatably or pivotally connecting a first (4) and a second (6) component to each other, wherein
the two components (4, 6) are connected by a connecting element (8) disposed to be coaxial to a rotary or pivot axis (A);
each of the two components (4, 6) comprises at least one first contact zone (10.4, 10.6), the contact zones (10.4, 10.6) having first abutment faces (12.4, 12.6) which are complementary with respect to each other;
the respective first abutment faces (12.4, 12.6) being urged towards each other with an elastic preload force by a biasing part; and
a latching geometry acting as a first latching means (14) being arranged between the first abutment faces (12.4, 12.6),
wherein
each of the two components (4, 6) has at least one second contact zone (18.4, 18.6), the second contact zones (18.4, 18.6) comprising second abutment faces (20.4, 20.6) which can be made to interact with each other;
each of the second contact zones (18.4, 18.6) is arranged so as to be radially further outside with respect to the rotary or pivot axis (A) than the first contact zones (10.4, 10.6); **characterized in**
**that** the second abutment faces (20.4, 20.6) of the second contact zones (18.4, 18.6) abut each other and hence interact with each other only in at least one defined relative position of the two components (4, 6), and
**that** in the at least one defined relative position, the first abutment faces (12.4, 12.6) of the contact zones (10.4, 10.6) are in operative engagement with each other and simultaneously, the second abutment faces (20.4, 20.6) of the second contact zones (18.4, 18.6) are in operative engagement with each other.

2. The bearing assembly according to claim 1, **characterized in that** the second abutment faces (20.4, 20.6), when in mutual abutment in the at least one defined relative position of the two components (4, 6), are complementary to each other such that they lock said relative position.

3. The bearing assembly according to claim 2, **characterized in that** the locking of the at least one relative position includes a cancelable positional fixing of the two components (4, 6) relative to each other and/or an additional support, in particular a torque support of the rotatable or pivotable connection of the two components in the area of the rotary or pivot axis (A).

4. The bearing assembly according to claim 3, **characterized in that** the cancelable positional fixing of the two components (4, 6) is established by a latching geometry, between the second abutment faces (20.4, 20.6), acting as a second latching means (22).

5. The bearing assembly according to any of claims 1 to 4, **characterized in that** the first contact zones (10.4, 10.6) together with the first abutment faces (12.4, 12.6) provided therein each have the shape of a ring which is concentric to the rotary or pivot axis (A), and the second contact zones (18.4, 18.6) together with the second abutment faces (20.4, 20.6) provided therein are radially spaced from the outer circumference of the ring.

6. The bearing assembly according to any of claims 1 to 5, **characterized in that** the second contact zones (18.4, 18.6) together with the second abutment faces (20.4, 20.6) provided therein surround the first contact zones (10.4, 10.6) in annular fashion, in particular in the shape of a ring segment.

7. The bearing assembly according to claim 6, **characterized in that** the ring segments of the second abutment faces (20.4, 20.6) are disposed to be symmetric relative to the rotary or pivot axis (A).

8. The bearing assembly according to claim 7, **characterized in that** the position of the ring segments corresponds to at least one defined operating position of the two components (4, 6) relative to each other.

9. The bearing assembly according to any of claims 1 to 8, **characterized in that** at least one of the first contact zones (10.4, 10.6) together with the first abutment face (12.4, 12.6) provided therein is situated radially within a surrounding sealing (16) with respect to the rotary or pivot axis (A).

10. The bearing assembly according to claim 9, **characterized in that** a lubricant is provided in the space limited by the surrounding sealing (16).

11. The bearing assembly according to any of claims 4 to 10, **characterized in that** the latching geometry between the two first abutment faces (12.4, 12.6) is formed by a first latching toothing and the latching geometry between the two second abutment faces (20.4. 20.6) is formed by a second latching toothing.

12. The bearing assembly according to claim 11, **characterized in that** the flank pitches (S14, S22) of the teeth differ from each other in the first and the second latching toothing.

13. The bearing assembly according to claim 12, **characterized in that** the flank pitch (S14) of the first latching toothing is larger than that (S22) of the second latching toothing.

14. The bearing assembly according to any of claims 11 to 13, **characterized in that** the tooth spacing in the first latching toothing differs from that of the second latching toothing.

15. The bearing assembly according to any of claims 1 to 14, **characterized in that** the first and second contact zone (10.n, 18.n) is formed in one piece on the first and second component (4, 6), respectively.

16. The bearing assembly according to any of claims 1 to 14, **characterized in that** each of the first and second contact zone (10.n, 18.n) is an element which is separate from the first and second component (4, 6), respectively, and non-rotatably connected to the first and second component (4, 6), respectively.

17. The bearing assembly according to claim 16, **characterized in that** the contact zones (10.n, 18.n) and the components (4, 6) are made from different materials.

18. A fastening device for attaching at least one mounting part to a vehicle, comprising at least one component (4) on the vehicle side and at least one component (6) on the side of the mounting part, wherein the components are connected to each other by at least one bearing assembly (2) according to any of claims 1 to 17.

19. A mounting part for vehicles, in particular commercial vehicles, comprising a fastening device according to claim 18.

## Revendications

1. Ensemble palier permettant la liaison rotative ou pivotante d'une première pièce (4) et d'une deuxième pièce (6), dans lequel
les deux pièces (4, 6) sont reliées par l'intermédiaire d'un élément de liaison (8) situé de manière coaxiale par rapport à un axe de rotation ou de pivotement (A) ;
chacune des deux pièces (4, 6) présente respectivement au moins une première zone de contact (10.4, 10.6), dans lequel les zones de contact (10.4, 10.6) présentent des premières surfaces d'appui (12.4, 12.6) complémentaires l'une de l'autre ;
les premières surfaces d'appui (12.4, 12.6) respectives sont sollicitées l'une vers l'autre par une pièce de précontrainte au moyen d'une force de précontrainte élastique ; et
une géométrie d'encliquetage agissant sous la forme d'un premier encliquetage (14) est agencée entre les premières surfaces d'appui (12.4, 12.6),
dans lequel
chacune des deux pièces (4, 6) présente respectivement au moins une deuxième zone de contact (18.4, 18.6), dans lequel les deuxièmes zones de contact (18.4, 18.6) présentent des deuxièmes surfaces d'appui (20.4, 20.6), lesquelles peuvent être amenées en interaction l'une avec l'autre ;
chacune des deuxièmes zones de contact (18.4, 18.6) se situe radialement davantage à l'extérieur que les premières zones de contact (10.4, 10.6) par rapport à l'axe de rotation ou de pivotement (A),
**caractérisé**
**en ce que** les deuxièmes surfaces d'appui (20.4, 20.6) des deuxièmes zones de contact (18.4, 18.6) ne sont en appui et donc en interaction l'une avec l'autre que dans au moins une position relative définie des deux pièces (4, 6) l'une par rapport à l'autre ; et
**en ce que**, dans l'au moins une position relative définie, les premières surfaces d'appui (12.4, 12.6) des premières zones de contact (10.4, 10.6) sont en contact actif l'une par rapport à l'autre et, en même temps, les deuxièmes surfaces d'appui (20.4, 20.6) des deuxièmes zones de contact (18.4, 18.6) sont en contact actif l'une par rapport à l'autre.

2. Ensemble palier selon la revendication 1, **caractérisé en ce que** les deuxièmes surfaces d'appui (20.4, 20.6), lorsqu'elles sont en appui l'une avec l'autre dans l'au moins une position relative définie des deux pièces (4, 6) l'une par rapport à l'autre, sont complémentaires l'une de l'autre de telle sorte qu'elles bloquent cette position relative.

3. Ensemble palier selon la revendication 2, **caractérisé en ce que** le blocage de l'au moins une position relative comporte une fixation en position, susceptible d'être libérée, des deux pièces (4, 6) l'une par rapport à l'autre et/ou un support additionnel, en particulier un support de couple, de la liaison rotative ou pivotante des deux pièces dans la zone de l'axe de rotation ou de pivotement (A).

4. Ensemble palier selon la revendication 3, **caractérisé en ce que** la fixation en position, susceptible d'être libérée, des deux pièces (4, 6) s'effectue au moyen d'une géométrie d'encliquetage agissant sous la forme d'un deuxième encliquetage (22) entre les deuxièmes surfaces d'appui (20.4, 20.6).

5. Ensemble palier selon l'une quelconque des revendications 1 à 4, **caractérisé en ce que** les premières zones de contact (10.4, 10.6) dans lesquelles se trouvent les premières surfaces d'appui (12.4, 12.6) présentent respectivement la forme d'un anneau concentrique par rapport à l'axe de rotation ou de pivotement (A) et les deuxièmes zones de contact (18.4, 18.6) dans lesquelles se trouvent les deuxièmes surfaces d'appui (20.4, 20.6) se situent radialement à une certaine distance de la périphérie extérieure de l'anneau.

6. Ensemble palier selon l'une quelconque des revendications 1 à 5, **caractérisé en ce que** les deuxièmes zones de contact (18.4, 18.6) dans lesquelles se trouvent les deuxièmes surfaces d'appui (20.4, 20.6) entourent les premières zones de contact (10.4, 10.6) de manière annulaire, en particulier en formant un segment annulaire.

7. Ensemble palier selon la revendication 6, **caractérisé en ce que** les segments annulaires des deuxièmes surfaces d'appui (20.4, 20.6) se situent de manière symétrique par rapport à l'axe de rotation ou de pivotement (A).

8. Ensemble palier selon la revendication 7, **caractérisé en ce que** la position des segments annulaires correspond au moins à une position de fonctionnement définie des deux pièces (4, 6) l'une par rapport à l'autre.

9. Ensemble palier selon l'une quelconque des revendications 1 à 8, **caractérisé en ce qu'**au moins une des premières zones de contact (10.4, 10.6) dans laquelle se trouve la première surface d'appui (12.4, 12.6) se situe radialement à l'intérieur d'un joint périphérique (16) par rapport à l'axe de rotation ou de pivotement (A).

10. Ensemble palier selon la revendication 9, **caractérisé en ce qu'**un lubrifiant se trouve dans la chambre délimitée par le joint périphérique (16).

11. Ensemble palier selon l'une quelconque des revendications 4 à 10, **caractérisé en ce que** la géométrie d'encliquetage entre les deux premières surfaces d'appui (12.4, 12.6) est formée par une première denture d'encliquetage et la géométrie d'encliquetage entre les deux deuxièmes surfaces d'appui (20.4, 20.6) est formée par une deuxième denture d'encliquetage.

12. Ensemble palier selon la revendication 11, **caractérisé en ce que** les flancs (S14, S22) des dents sont différents l'un de l'autre dans la première et la deuxième denture d'encliquetage.

13. Ensemble palier selon la revendication 12, **caractérisé en ce que** le flanc (S14) de la première denture d'encliquetage est plus grand que celui (S22) de la deuxième denture d'encliquetage.

14. Ensemble palier selon l'une quelconque des revendications 11 à 13, **caractérisé en ce que** le pas de dents dans la première denture d'encliquetage est différent de celui de la deuxième denture d'encliquetage.

15. Ensemble palier selon l'une quelconque des revendications 1 à 14, **caractérisé en ce que** la première ou deuxième zone de contact (10.n, 18.n) est réalisée d'une seule pièce sur la première ou deuxième pièce (4, 6).

16. Ensemble palier selon l'une quelconque des revendications 1 à 14, **caractérisé en ce que** la première ou deuxième zone de contact (10.n, 18.n) est respectivement un élément séparé par rapport à la première ou deuxième pièce (4, 6), lequel est relié de manière solidaire en rotation à la première ou deuxième pièce (4, 6).

17. Ensemble palier selon la revendication 16, **caractérisé en ce que** les zones de contact (10.n, 18.n) et les pièces (4, 6) sont formées de différents matériaux.

18. Dispositif de fixation pour le montage d'au moins une pièce rapportée sur un véhicule, pourvu d'au moins une pièce (4) côté véhicule et d'au moins une pièce (6) côté pièce rapportée, dans lequel les pièces sont reliées l'une à l'autre par l'intermédiaire d'au moins un ensemble palier (2) selon l'une quelconque des revendications 1 à 17.

19. Pièce rapportée pour véhicules, en particulier pour véhicules utilitaires, pourvue d'un dispositif de fixation selon la revendication 18.
